(19) **Europäisches Patentamt**
**European Patent Office**
**Office européen des brevets**

(11) **EP 3 343 371 B1**

(12) **FASCICULE DE BREVET EUROPEEN**

(45) Date de publication et mention
de la délivrance du brevet:
**14.10.2020 Bulletin 2020/42**

(51) Int Cl.:
***G06F 9/50*** *(2006.01)*     ***G06F 11/34*** *(2006.01)*

(21) Numéro de dépôt: **17211005.8**

(22) Date de dépôt: **28.12.2017**

(54) **DISPOSITIF ET PROCÉDÉ DE SURVEILLANCE ET D'ALLOCATION DE RESSOURCES DES INFRASTRUCTURES INFORMATIQUES**

VORRICHTUNG UND VERFAHREN ZUR ÜBERWACHUNG UND ZUWEISUNG VON RESSOURCEN VON IT-INFRASTRUKTUREN

DEVICE AND METHOD FOR MONITORING AND ALLOCATING RESOURCES OF IT INFRASTRUCTURES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2016 FR 1663520**

(43) Date de publication de la demande:
**04.07.2018 Bulletin 2018/27**

(73) Titulaire: **BULL SAS**
**78340 Les Clayes Sous Bois (FR)**

(72) Inventeurs:
• **DEMEILLIEZ, Bruno**
**38410 Saint Martin d'Uriage (FR)**
• **ROCHETTE, Florent**
**38170 SEYSSINET PARISET (FR)**

• **CHAABANE, Wajih**
**73000 CHAMBERY (FR)**

(74) Mandataire: **A.P.I. Conseil**
**Immeuble Newton**
**4, rue Jules Ferry**
**64000 Pau (FR)**

(56) Documents cités:
**US-A1- 2012 297 385    US-A1- 2015 026 348**

• **VINCENT C EMEAKAROHA ET AL: "Low level Metrics to High level SLAs - LoM2HiS framework: Bridging the gap between monitored metrics and SLA parameters in cloud environments", HIGH PERFORMANCE COMPUTING AND SIMULATION (HPCS), 2010 INTERNATIONAL CONFERENCE ON, IEEE, PISCATAWAY, NJ, USA, 28 juin 2010 (2010-06-28), pages 48-54, XP031731503, ISBN: 978-1-4244-6827-0**

**Description**

**DOMAINE TECHNIQUE DE L'INVENTION**

L'invention se rapporte au domaine de la surveillance des performances des infrastructures informatiques et plus particulièrement à celui des performances des systèmes en production.

**ÉTAT DE LA TECHNIQUE ANTÉRIEURE**

Les applications informatiques connaissent d'importantes variations dans leur niveau d'utilisation.
Ces variations sont dues au nombre d'utilisateurs simultanément connectés durant la journée et à leur profil d'utilisation.
Il existe des dispositifs de surveillance et d'allocation de ressources qui allouent une quantité de ressources en fonction des niveaux d'utilisation/saturation en élaborant un planning prévisionnel des niveaux d'utilisation. En effet, les niveaux d'utilisation peuvent varier :

- dans la journée (par exemple, plages horaires de travail par rapport au reste de la journée)
- dans la semaine (par exemple, mercredi journée de congé pour certains salariés, weekend par rapport aux jours de semaine)
- dans le mois et l'année (par exemple, période de clôture mensuelle, trimestrielle, annuelle, etc)

Néanmoins, faute d'outillage et de temps, les administrateurs des applications dimensionnent l'intrastructure informatique utilisée par ces applications de sorte à toujours garantir un bon niveau de service pendant les périodes de pointe en allouant un maximum de ressources disponibles. Il en ressort que durant certaines périodes, une partie plus ou moins importante des ressources n'est pas utilisée alors que d'autres sont très voir trop sollicitées.
Le document US 2015/026348 A1 (SIDDIQUI MUHAMMAD ALI [US] ET AL) décrit un gestionnaire de capacité qui réajuste automatiquement l'allocation des ressources d'une infrastructure informatique en réponse à des changements de demande ou d'utilisation. Ce gestionnaire comprend un module de prévision, un module de surveillance et un module d'ajustement de ressources. Le module de prévision détermine la demande future en ressources sur la base d'un historique et modifie les seuils inférieur et supérieur de la quantité de ressources allouable à un programme. Le module de surveillance surveille l'usage actuel des ressources de l'infrastructure ainsi que le nombre d'utilisateurs et détermine quand une métrique du système est en dehors de la plage de fonctionnement souhaitée. Dans ce cas, le module de surveillance envoie une notification au module d'ajustement, qui modifie la quantité de ressources allouée au programme tout en restant entre les seuils inférieur et supérieur déterminés par le module de prévision.
Il existe donc un besoin d'un dispositif de surveillance et d'allocation de ressources permettant de pallier au moins une partie des inconvénients de l'art antérieur en ajustant en temps réel la quantité de ressources allouées en fonction de la quantité de ressources réellement utilisés afin d'optimiser l'utilisation des ressources libérant ainsi des ressources pour d'autre application et diminuant par la même occasion le coût de l'infrastructure informatique de la chaîne applicative.

**EXPOSE DE L'INVENTION**

L'invention est spécifiée par les revendications indépendantes annexées. En outre, des modes de réalisation préférés sont définis par les revendications dépendantes.
À cet effet, l'invention concerne un dispositif comprenant au moins une machine informatique et un logiciel pour mettre en œuvre un mécanisme de surveillance des performances des infrastructures informatiques pour une infrastructure informatique composant la chaîne de liaison d'une application déterminée, caractérisé en ce que le diapositif est constitué par au moins :

- un agencement matériel et logiciel d'identification et de planification du nombre d'utilisateurs selon leur profil pour une application donnée, comprenant au moins :

  i. un module d'identification permettant d'une part l'identification d'un utilisateur par l'association d'un identifiant avec son profil de maitrise de l'application déterminée, pour une période de temps (T) puis assurant d'autre part la mémorisation de l'identifiant dans une mémoire.
  ii. un module d'évaluation permettant d'une part l'évaluation du nombre d'utilisateurs répartis selon leur profil en fonction de leur habitude d'utilisation de l'application déterminée pour la période (T) puis assurant d'autre part la mémorisation dans une mémoire sous la forme d'un planning,

- un agencement matériel et logiciel d'allocation de ressources de l'infrastructure informatique composant la chaîne de liaison de l'application, comprenant au moins :

    i. un module d'allocation permettant, pour une période de temps donnée (T), l'allocation d'un intervalle de ressources allouables sur l'infrastructure informatique composant la chaîne de liaison de l'application en fonction du profil et nombre d'utilisateurs,

- un agencement matériel et logiciel de surveillance, par une application, des consommations des ressources de l'infrastructure informatique composant la chaîne de liaison de l'application, comprenant un référentiel de mesure,

    i. ledit référentiel de mesure comprenant un agencement matériel et logiciel permettant la mesure, par des sondes de consommation, du niveau d'utilisation de chaque ressource sur l'ensemble de l'infrastructure informatique composant la chaîne applicative durant la période de temps donnée (T), puis permettant la mémorisation dans une mémoire de ces niveaux d'utilisation dans le référentiel de mesure, en association avec la période donnée (T),
    ii. un module d'évaluation et d'ajustement de ressources allouées pour un intervalle défini par la période de temps donnée (T) et par une période ultérieure (T+1) d'utilisation en fonction d'une estimation du nombre d'utilisateurs répartis selon leur profil pour une période donnée (T) et la période ultérieure (T+1).

Par module il faut comprendre un ensemble de codes exécutable sur un système informatique pour réaliser les fonctionnalités décrites pour le module.

Par période de temps, on entend toutes périodes temporelles allant de quelques millisecondes à une année en passant par les secondes, minutes, heures jours, semaine et mois.

Ainsi, un tel dispositif permet de contrôler les variations de charge en fonction du nombre d'utilisateurs mais également en fonction du type d'utilisateur (profil). En effet, chaque utilisateur a un profil déterminé (par la nature de son activité, son habitude d'utilisation de l'application, etc.) ; la qualification des profils permet d'allouer spécifiquement à tel profil une quantité de ressources qui correspond au plus près aux besoins de l'utilisateur, permettant ainsi de rediriger les ressources non utilisées vers d'autres applications

Selon une particularité, des sondes de consommation sont associées à chaque ressource pour remonter et enregistrer en mémoire, en fonction de chaque utilisateur, les informations de mesure ou métriques, représentant le niveau d'utilisation des ressources *(Nur),* pour une période de temps (T) déterminée.

Selon une autre particularité, un planning enregistré en mémoire permet d'anticiper le nombre d'utilisateurs et la répartition de leur profil pendant une période de temps donnée (T).

Avantageusement, chaque profil d'utilisateur comporte un attribut de catégorisation mémorisé (débutant, confirmé, expert) et pour chaque catégorisation est déterminée un intervalle de ressource utilisable par profil en fonction du nombre d'utilisateurs.

Selon une particularité, un module de contrôle de ressources allouées pour chaque intervalle permettant de détecter des anomalies et de signaler des alertes en temps réel lorsque :

- le seuil maximum d'une ressource est atteint,
- la consommation de ressources théoriques prévue et mémorisée en fonction du profil d'utilisateurs connectés ne correspond pas à la consommation mesurée, et/ou
- l'estimation de la consommation des ressources de la chaîne applicative se situe hors des intervalles déterminés antérieurement.

Un autre objet de la présente invention est un procédé de surveillance des performances des infrastructures informatiques composant la chaîne de liaison d'une application déterminée, mis en œuvre par un logiciel exécuté sur au moins une machine de l'infrastructure informatique, caractérisé en ce qu'il comporte :

• une étape de collecte d'un nombre d'utilisateurs et de profils sur la chaîne applicative pour un intervalle de temps donné T,
• une étape de détermination en fonction du nombre d'utilisateurs d'un niveau de consommation de ressources nécessaires correspondant à chaque profil utilisateur pendant l'intervalle de temps T,
• une étape d'allocation d'un intervalle de ressources allouables à la chaîne de liaison applicative,
• une étape d'évaluation du nombre d'utilisateurs par profil sur la chaîne applicative pour l'intervalle de temps ultérieur T+1,
• une étape de vérification de l'intervalle de ressources préalablement allouées pour chacun des profils en fonction du nombre d'utilisateurs sur l'intervalle de temps ultérieur T+1,

- une étape d'alerte lorsque l'intervalle de ressources préalablement allouées ne correspond pas au nombre d'utilisateurs sur l'intervalle de temps ultérieur T+1, et
- optionnellement, une étape de modification de la quantité de ressources préalablement allouées pour anticiper le niveau de consommation de ressources nécessaires pour chaque profil utilisateur pour la période de temps ultérieur T+1.

Selon une autre particularité, durant l'étape d'allocation d'un intervalle de ressources allouables à la chaîne de liaison applicative, une machine de l'infrastructure informatique vérifie si un seuil maximum d'allocation d'une ressource est atteint, en comparant la limite de l'intervalle à une valeur maximale préalablement enregistrée dans la mémoire, le cas échéant un signal d'alerte d'anomalies sur la chaîne applicative est alors envoyé par la machine de l'infrastructure informatique ayant effectué la vérification.

Avantageusement, durant l'étape de vérification de la taille de l'espace préalablement alloué pour un nombre d'utilisateurs sur l'intervalle de temps ultérieur T+1, une machine de l'infrastructure informatique signalant une alerte préventive d'anomalie sur la chaîne applicative lorsque les consommations pour l'intervalle de temps T+1 ne sont pas dans l'intervalle de ressources allouées pour l'intervalle de temps T.

Selon une particularité, le procédé comprend une étape de mesure du niveau de ressources utilisées en temps réel et une étape de comparaison du niveau de ressources utilisées en temps réel avec le niveau de ressources préalablement allouées, une machine de l'infrastructure informatique signalant une alerte de surconsommation de ressources sur la chaîne applicative lorsque la consommation des ressources mesurées en temps réel est inférieure au niveau de ressources allouées.

Selon une autre particularité, le procédé comprend une étape d'automatisation de la modification de la quantité de ressources allouées lorsqu'une alerte a été émise.

Un tel dispositif et un tel procédé permettent ainsi de dimensionner correctement la chaîne applicative en fonction de sa saisonnalité ou lors d'un déploiement d'une nouvelle application en fonction de ses différentes phases de mise à disposition.

## BRÈVE DESCRIPTION DES FIGURES

D'autres caractéristiques, détails et avantages de l'invention ressortiront à la lecture de la description qui suit en référence aux figures annexées, qui illustre :

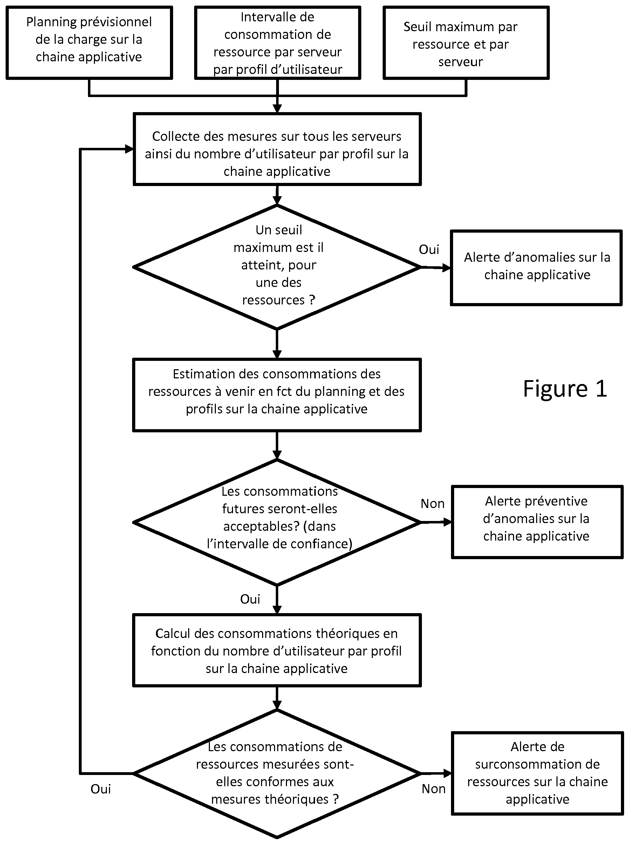

- la figure 1, représente un algorithme de surveillance des ressources et de déclenchement d'alerte.

## DESCRIPTION DÉTAILLÉE DE DIFFÉRENTS MODES DE RÉALISATION DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

La présente invention concerne un dispositif comprenant au moins une machine informatique et un logiciel communiquant avec les autres matériels ou logiciels d'une chaîne applicative pour mettre en œuvre un mécanisme de surveillance et d'allocation de ressources des infrastructures informatiques pour 69/821074infrastructure informatique composant la chaîne de liaison d'une application déterminée.

La chaîne applicative comprend un ensemble de ressources ($R_1$,..., $R_i$,..., $R_n$) utilisée en tout ou partie par une pluralité de serveurs ($S_1$,..., $S_j$,..., $S_m$), la structuration de la chaîne applicative est donc représentée en mémoire par une liste d'identifiants $Ir_i$ de ressources associés à chaque serveur $S_j$.

Dans un mode de réalisation, le dispositif comporte au moins un agencement matériel et logiciel d'identification et de planification du nombre d'utilisateurs selon leur profil pour une application donnée.

L'administrateur détermine le profil de chaque utilisateur, en fonction des actions métiers réalisées par celui-ci, ses actions sont déterminées en fonction de leurs métier, par exemple, des saisies de données ou des études statistiques, mais également de sa maitrise de l'application et donc sa rapidité à exécuter ses différentes actions à réaliser les différents actes métiers.

Le profil de chaque utilisateur est enregistré en mémoire en association avec son identifiant sous la forme d'un attribut ($P_1$... $P_l$..., $P_o$...), à titre d'exemple métier 1 - débutant, métier 1 - confirmé, métier 1 - expert.

Chaque profil est associé à un intervalle de ressources utilisables par les utilisateurs de chaque type de profils. Cet intervalle de ressources est déterminé à partir de la résolution d'au moins une équation matricielle prenante en compte les ressources disponibles et la moyenne pondérée d'utilisation de ressources de la part des utilisateurs en fonction de leur profil.

Dans certains modes de réalisation, l'équation matricielle peut correspondre à une succession de fonctions affines pour chaque ressource R en fonction du nombre d'utilisateurs par profil, à titre d'exemple :

$$R_1 = [N(P_1) * MoyPond(P_1R_1) + ... + N(P_i) * MoyPond(P_iR_1) + ... + N(P_1) * MoyPond(P_oR_1)] + B(R_1)$$

$$R_j = [N(P_1) * MoyPond(P_1R_j) + ... + N(P_i) * MoyPond(P_iR_j) + ... + N(P_1) * MoyPond(P_oR_j)] + B(R_j)$$

$$R_n = [N(P_1) * MoyPond(P_1R_n) + ... + N(P_i) * MoyPond(P_iR_n) + ... + N(P_1) * MoyPond(P_oR_n)] + B(R_j)$$

Avec :

- $N(P_x)$ représente le nombre d'utilisateurs connectés ayant le profil $P_x$,
- $MoyPond(P_xR_x)$ représente la moyenne pondérée de consommation de la ressource $R_x$ par un utilisateur connecté ayant le profil $P_x$,
- $B(R_x)$ représente la valeur de consommation de ressources $R_x$ qui est constante, quel que soit le nombre d'utilisateurs, $B(R_x)$ pouvant être égal à zéro ou plus.

La détermination du profil de chaque l'utilisateur pour chaque application, présente sur la chaine applicative, est effectuée initialement par l'administrateur qui enregistre manuellement, par application, pour chaque utilisateur un profil associé à son identifiant, dans une base de données ou encore un annuaire LDAP de l'infrastructure informatique.

Par la suite, l'administrateur de l'infrastructure informatique affinera la catégorisation des utilisateurs en fonction de leur profil par exemple, en fonction de relevés statistiques sur leur utilisation de l'application.

Dans certains modes de réalisation, cette catégorisation peut, se faire sur la base d'une balise associée à l'identifiant d'un utilisateur enregistré en mémoire. Cette balise peut évoluer dans temps, en fonction de l'évolution du profil de l'utilisateur (par exemple en fonction de sa maitrise de l'application, c'est-à-dire de sa rapidité d'exécution de ses différents actes métiers ou par un changement des actes métiers réalisés), au fil des utilisations, permettant ainsi à l'utilisateur de changer de profil. À titre d'exemple, pour une application web, ladite balise peut être l'utilisation d'un cookie.

En outre, une telle balise permet au dispositif de connaître en temps réel le nombre d'utilisateurs connectés et la répartition de ceux-ci en fonction de leur profil.

Cette catégorisation est effectuée par un module qui enregistre en mémoire l'identification d'un utilisateur et de son profil de maitrise de l'application déterminée et procède à la création d'un historique en mémoire.

Cet historique permet à un module d'extrapolation, d'extrapoler ces données d'utilisation afin d'établir un planning enregistré en mémoire pour anticiper le nombre d'utilisateurs et la répartition de leur profil sur une période de temps donnée (T).

En recoupant ces informations avec une surveillance des consommations de ressources des différents serveurs composant la chaîne de liaison de l'application, le dispositif est à même de déterminer le niveau de consommation pour chaque profil utilisateur.

Une telle surveillance des consommations de ressources peut être effectuée, à titre d'exemple, au moyen de sondes de consommation qui sont associées à chaque ressource pour remonter et enregistrer en mémoire, en fonction de chaque utilisateur, les informations de mesure ou métriques, représentant le niveau d'utilisation des ressources (*Nur*), telle que décrite dans la demande de brevet française FR 1 560 474, également déposée par le titulaire.

Dans certains modes de réalisation, le dispositif comporte au moins un agencement matériel et logiciel d'allocation de ressources de l'infrastructure informatique composant la chaîne de liaison de l'application qui moyenne les niveaux de consommation enregistrés (*Nur*) en mémoire en fonction du nombre et de la répartition des profils utilisateurs, et calcule en mémoire le besoin en ressources sur les différents serveurs composant la chaîne de liaison de l'application en fonction d'une estimation de la population (nombre d'utilisateurs et leur profil associé) issue du planning enregistré pour la période de temps T.

Un module permet alors l'allocation d'un intervalle de confiance de ressources allouables sur l'infrastructure informatique composant la chaîne de liaison de l'application. Les valeurs de l'intervalle sont définies par des valeurs minimales et maximales possibles en fonction des différents profils sur la chaîne applicative, ces valeurs sont enregistrées en mémoire et pourront être modifiées/affinées au fil du temps. En effet, dans un premier temps elles sont relativement larges puis au fil des nouveaux cycles de mesure (population et consommation de ressources), celles-ci seront modifiées/affinées par un administrateur et/ou par un module (de façon automatique) afin que les ressources allouées sur l'intrastructure informatique correspondent le plus possible aux ressources réellement consommées par les utilisateurs.

Dans un mode de réalisation, l'ajustement peut être effectué par un module d'évaluation et d'ajustement de ressources allouées. Un tel module vérifie que les ressources allouées pour la période de temps (T) sont compatibles avec la population estimée dans le planning enregistré pour la période de temps (T+1).

- Si c'est le cas, le module vérifie pour les prochaines périodes de temps (T+2) à (T+X).
- Si ce n'est pas le cas, celui-ci peut émettre une alerte, et optionnellement peut ordonner au module d'allocation de ressources de modifier l'intervalle de ressources allouables afin d'éviter toute surconsommation ou sousconsommation de ressources pour la période de temps (T+1).

Selon un mode de réalisation, le dispositif peut comprendre un module de contrôle de ressources allouées par intervalles permettant de détecter des anomalies et de signaler des alertes en temps réel lorsque :

- Une valeur maximale d'une ressource est atteinte,
- La consommation de ressources théoriques prévue en fonction du profil d'utilisateurs connectés ne correspond pas à la consommation mesurée, et/ou
- L'estimation de la consommation des ressources de la chaîne applicative se situe hors de l'intervalle déterminé antérieurement.

Ainsi, lorsqu'une valeur maximale d'une ressource est atteinte, et que l'intervalle de ressource allouable ne peut être augmenté, le dispositif selon le mode de réalisation, informe :

- l'administrateur de l'infrastructure informatique afin qu'il intervient pour limiter/supprimer la saturation des ressources en en allouant davantage, et/ou
- l'utilisateur de

  ◦ l'indisponibilité de l'application et/ou
  ◦ une dégradation des performances de l'application.

Dans les autres cas d'alertes, le module de contrôle peut ordonner aux autres modules de modifier l'intervalle des ressources allouées et de modifier en conséquence les données enregistrées en mémoire, afin d'obtenir un intervalle de ressources allouées qui correspond aux ressources réellement utilisées par l'infrastructure informatique composant la chaîne de liaison d'une application.
Un tel dispositif met en œuvre, un procédé de surveillance décrit par la figure 1 comprenant au moins les étapes suivantes

- une étape de collecte et d'enregistrement dans la mémoire des informations d'un référentiel comprenant :

  ◦ la mesure par des sondes des ressources utilisées pour exécuter l'application sur l'infrastructure informatique de la chaîne applicative,
  ◦ le nombre d'utilisateurs de l'application en fonction d'un planning prévisionnel,
  ◦ La consommation moyenne de ressources de chaque profil d'utilisateur, déterminée lors des cycles de mesures antérieures sur l'infrastructure.
  ◦ la quantité maximale de ressources allouables de l'infrastructure informatique formant la chaîne applicative

- une étape de contrôle de seuil, permettant de vérifier si une quantité maximale d'une ressource est atteinte. Si c'est le cas, le dispositif émet une alerte d'anomalies sur la chaîne applicative et, selon les modes de réalisation, bloque l'accès à l'utilisateur jusqu'à un retour du niveau de consommation de ressources acceptable, et/ou informe l'utilisateur de la dégradation des performances, et/ou informe l'administrateur de l'infrastructure informatique afin qu'il intervient pour limiter/supprimer la saturation des ressources en en allouant davantage.
- Une étape d'estimation de la consommation de ressources à venir en fonction du planning prévisionnel et des profils sur la chaîne applicative.
- Une étape de contrôle de la quantité de ressources allouées préalablement vis-à-vis de l'estimation de la consommation de ressources à venir.
  ◦ Si l'estimation de consommation de ressources à venir ne rentre pas dans l'intervalle des ressources préalablement allouées, le dispositif émet une alerte préventive d'anomalie sur la chaîne applicative et ordonne au module d'allocation de modifier l'intervalle de ressources allouées, afin que celui-ci corresponde à la consommation de ressources à venir.
- Une étape de calcul de la consommation théorique de ressources en fonction du nombre d'utilisateurs par profil et leur enregistrement dans la mémoire et de leur vérification vis-à-vis des ressources réellement mesurées. Si celles-ci ne correspondent pas aux valeurs de l'intervalle de ressources allouées, le dispositif émet une alerte de surconsommation de ressources sur la chaîne applicative et peut optionnellement (selon le mode de réalisation) ordonner au module d'allocation de modifier l'intervalle de ressources allouées ainsi que la modification en mémoire des consommations moyennes théoriques de chaque profil afin que le prochain cycle d'allocation de ressources corresponde mieux à la consommation réelle de ressources de la part des utilisateurs de l'application.

Dans certains modes de réalisation, la présente invention concerne un procédé de surveillance des performances des infrastructures informatiques composant la chaîne de liaison d'une application déterminée, mis en œuvre par un logiciel exécuté sur au moins une machine de l'infrastructure informatique, caractérisé en ce qu'il comporte :

- une étape de collecte d'un nombre d'utilisateurs par profil sur la chaîne applicative pour l'intervalle de temps donné T,
- une étape de détermination d'un niveau de consommation de ressources nécessaire pour chaque ensemble de profil utilisateur pour l'intervalle de temps T en fonction du nombre d'utilisateurs,
- une étape d'allocation d'un intervalle de ressources allouables à la chaîne de liaison applicative,
- une étape d'évaluation du nombre d'utilisateurs par profil sur la chaîne applicative pour l'intervalle de temps ultérieur T+1,
- une étape de vérification de l'intervalle de ressources préalablement allouées pour chacun des profils en fonction du nombre d'utilisateurs sur l'intervalle de temps ultérieur T+1,
- une étape d'alerte de l'administrateur lorsque l'intervalle de ressources préalablement allouées ne correspond pas au nombre d'utilisateurs sur l'intervalle de temps ultérieur T+1, et
- optionnellement une étape de modification de la quantité de ressources préalablement allouées pour anticiper le niveau de consommation de ressources nécessaires pour chaque profil utilisateur pour la période de temps ultérieur T+1.

On comprendra aisément à la lecture de la présente demande que les particularités de la présente invention, comme généralement décrites et illustrées dans les figures, peuvent être arrangées et conçues selon une grande variété de configurations différentes. Ainsi, la description de la présente invention et les figures afférentes ne sont pas prévues pour limiter la portée de l'invention, mais représentent simplement des modes de réalisation choisis.

L'homme de métier comprendra que les caractéristiques techniques d'un mode de réalisation donné peuvent, en fait être combinées avec des caractéristiques d'un autre mode de réalisation à moins que l'inverse ne soit explicitement mentionné ou qu'il ne soit évident que ces caractéristiques soient incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, ils doivent être considérés à titre d'illustration et l'invention ne doit pas être limitée aux détails donnés ci-dessus.

**Revendications**

1. Dispositif comprenant au moins une machine informatique et un logiciel pour mettre en œuvre un mécanisme de surveillance des performances des infrastructures informatiques grâce à une surveillance des consommations des ressources desdites infrastructures informatiques pour une infrastructure informatique composant la chaîne de liaison d'une application déterminée, **caractérisé en ce que** le dispositif est constitué par au moins :

   - un agencement matériel et logiciel d'identification et de planification du nombre d'utilisateurs selon leur profil utilisateur pour une application donnée, ledit profil utilisateur comportant un attribut de catégorisation déterminant un premier intervalle de ressources, ledit agencement matériel et logiciel comprenant au moins :

      i. un module d'identification permettant d'une part l'identification d'un utilisateur par l'association d'un identifiant avec son profil utilisateur de l'application déterminée, pour une période de temps (T) puis assurant d'autre part la mémorisation de l'identifiant dans une mémoire,

      ii. un module d'évaluation permettant d'une part l'évaluation du nombre d'utilisateurs répartis selon leur profil utilisateur en fonction de leur habitude d'utilisation de l'application déterminée pour la période (T) puis assurant d'autre part la mémorisation dudit nombre d'utilisateurs répartis selon leur profil utilisateur dans un référentiel de mesure compris dans la mémoire sous la forme d'un planning;

- un agencement matériel et logiciel d'allocation de ressources de l'infrastructure informatique composant la chaîne de liaison de l'application, comprenant au moins :

    i. un module d'allocation permettant, pour une période de temps donnée (T), l'allocation d'un intervalle de ressources allouables sur l'infrastructure informatique composant la chaîne de liaison de l'application en fonction du premier intervalle de ressources déterminé par l'attribut de catégorisation du profil utilisateur et du nombre d'utilisateurs,

- un agencement matériel et logiciel de surveillance, par une application, des consommations des ressources de l'infrastructure informatique composant la chaîne de liaison de l'application, comprenant le référentiel de mesure, et comprenant en outre

    i. un agencement matériel et logiciel permettant la mesure, par des sondes de consommation, du niveau d'utilisation de chaque ressource sur l'ensemble de l'infrastructure informatique composant la chaîne applicative durant une période de temps donnée (T), puis permettant la mémorisation dans la mémoire de ces niveaux d'utilisation dans le référentiel de mesure, en association avec la période donnée (T),
    ii. un module d'évaluation et d'ajustement de ressources allouées pour un intervalle de temps défini par une période de temps donnée (T) et par une période de temps ultérieure (T+1) d'utilisation en fonction d'une estimation du nombre d'utilisateurs répartis selon le premier intervalle de ressources déterminé par l'attribut de catégorisation de chaque profil pour la période donnée (T) et la période ultérieure (T+1), ledit module d'évaluation et d'ajustement permettant en outre d'ajuster l'intervalle de ressources allouables en fonction d'un deuxième intervalle de ressources déterminé par l'attribut de catégorisation du profil utilisateur et le nombre d'utilisateurs pour la période ultérieure (T+1).

2. Dispositif selon la revendication 1, **caractérisé en ce que** des sondes de consommation sont associées à chaque ressource pour remonter et enregistrer en mémoire, en fonction de chaque utilisateur, les informations de mesure ou métriques, représentant le niveau d'utilisation des ressources (*Nur),* pour une période de temps (T) déterminée.

3. Dispositif selon la revendication 1 ou 2, **caractérisé en ce qu'** un planning enregistré en mémoire permet d'anticiper le nombre d'utilisateurs et la répartition de leur profil pendant une période de temps donnée (T).

4. Dispositif selon l'une des revendications 1 à 3, **caractérisé en ce que** chaque profil d'utilisateur comporte un attribut de catégorisation mémorisé (débutant, confirmé, expert) et pour chaque catégorisation est déterminée un intervalle de ressources utilisable par profil en fonction du nombre d'utilisateurs.

5. Dispositif selon l'une des revendications 1 à 4, **caractérisé en ce qu'**il comprend un module de contrôle de ressources allouées pour chaque intervalle permettant de détecter des anomalies et de signaler des alertes en temps réel lorsque :

    - le seuil maximum d'une ressource est atteint,
    - la consommation de ressources théoriques prévue et mémorisée en fonction du profil d'utilisateurs connectés ne correspond pas à la consommation mesurée, et/ou
    - l'estimation de la consommation des ressources de la chaîne de liaison applicative se situe hors des intervalles déterminés antérieurement.

6. Procédé de surveillance des performances des infrastructures informatiques grâce à une surveillance des consommations des ressources desdites infrastructures informatiques pour une infrastructure informatique composant la chaîne de liaison d'une application déterminée, mis en œuvre par un logiciel exécuté sur au moins une machine de l'infrastructure informatique, **caractérisé en ce qu'**il comporte au moins :

    - une étape de collecte d'un nombre d'utilisateurs et de leurs profils utilisateurs sur la chaîne de liaison applicative pour un période de temps donnée T, ledit profil utilisateur comportant un attribut de catégorisation déterminant un premier intervalle de ressources,
    - une étape de détermination en fonction du nombre d'utilisateurs d'un niveau de consommation de ressources nécessaires correspondant à chaque profil utilisateur pendant la période de temps T,
    - une étape d'allocation d'un intervalle de ressources allouables à la chaîne de liaison applicative en fonction du premier intervalle de ressources déterminé par l'attribut de catégorisation du profil utilisateur et du nombre d'utilisateurs,

- une étape d'évaluation du nombre d'utilisateurs par profil utilisateur sur la chaîne applicative pour la période de temps ultérieure T+1, par un module d'évaluation qui détermine dans une mémoire un planning comprenant le nombre d'utilisateur réparti selon un deuxième intervalle de ressources déterminé par l'attribut de catégorisation de chaque profil utilisateur pour la période de temps ultérieure T+1,

- une étape de vérification de l'intervalle de ressources préalablement allouées pour chacun des profils en fonction du nombre d'utilisateurs sur la période de temps ultérieure T+1, au moyen une machine de l'infrastructure informatique et de sondes de consommation,

- une étape d'alerte lorsque l'intervalle de ressources préalablement allouées ne correspond pas au nombre d'utilisateurs par profil sur la période de temps ultérieure T+1, et

- optionnellement, une étape de modification de la quantité de ressources préalablement allouées pour anticiper le niveau de consommation de ressources nécessaires pour chaque profil utilisateur pour la période de temps ultérieure T+1.

**7.** Procédé de surveillance selon la revendication 6, **caractérisé en ce que** durant l'étape d'allocation d'un intervalle de ressources allouables à la chaîne de liaison applicative, une machine de l'infrastructure informatique vérifie si un seuil maximum d'allocation d'une ressource est atteint, en comparant la limite de l'intervalle à une valeur maximale préalablement enregistrée dans la mémoire, le cas échéant un signal d'alerte d'anomalies sur la chaîne de liaison applicative est alors envoyé par la machine de l'infrastructure informatique ayant effectué la vérification.

**8.** Procédé de surveillance selon la revendication 6 ou 7, **caractérisé en ce que** durant l'étape de vérification de l'intervalle de ressources préalablement alloué pour un nombre d'utilisateurs sur la période de temps ultérieure T+1, une machine de l'infrastructure informatique signalant une alerte préventive d'anomalie sur la chaîne de liaison applicative lorsque les consommations pour la période de temps T+1 ne sont pas dans l'intervalle de ressources allouées pour la période de temps T.

**9.** Procédé de surveillance selon l'une des revendications 6 à 8, **caractérisé en ce qu'**il comprend une étape de mesure du niveau de ressources utilisées en temps réel et une étape de comparaison du niveau de ressources utilisées en temps réel avec le niveau de ressources préalablement allouées, une machine de l'infrastructure informatique signalant une alerte de surconsommation de ressources sur la chaîne de liaison applicative lorsque la consommation des ressources mesurées en temps réel est inférieure au niveau de ressources allouées.

**10.** Procédé de surveillance selon l'une des revendications 6 à 9, **caractérisé en ce qu'**il comprend une étape d'automatisation de la modification de la quantité de ressources allouées lorsqu'une alerte a été émise au moyen d'un module d'automatisation configuré pour modifier/affiner les valeurs minimales et maximales de l'intervalle de ressources allouées en fonction des ressources réellement consommées par les utilisateurs.

**Patentansprüche**

**1.** Vorrichtung umfassend mindestens eine Datenverarbeitungsmaschine und eine Software für die Implementierung eines Mechanismus zur Überwachung der Leistung der IT-Infrastrukturen durch die Überwachung des Ressourcenverbrauchs dieser IT-Infrastrukturen für eine IT-Infrastruktur, die die Verbindungskette einer bestimmten Anwendung bildet, **dadurch gekennzeichnet, dass** die Vorrichtung mindestens umfasst:

- eine Hardware- und Software-Anordnung zur Identifikation und Planung der Anzahl von Benutzern gemäß ihrem Benutzerprofil für eine gegebene Anwendung, wobei das Benutzerprofil ein Klassifizierungsattribut aufweist, das ein erstes Ressourcenintervall bestimmt, wobei die Hardware- und Software-Anordnung mindestens umfasst:

i. ein Identifikationsmodul, das einerseits die Identifikation eines Benutzers durch die Verknüpfung einer Kennung mit dem entsprechenden Benutzerprofil der bestimmten Anwendung für einen bestimmten Zeitraum (T) ermöglicht und andererseits anschließend die Speicherung der Kennung in einem Speicher sicherstellt,

ii. ein Auswertungsmodul, das einerseits die Auswertung der Anzahl von Benutzern, verteilt nach ihrem Benutzerprofil, in Abhängigkeit von ihrer Nutzungsgewohnheit der bestimmten Anwendung für den Zeitraum (T) ermöglicht und andererseits anschließend die Speicherung dieser Anzahl von Benutzern, verteilt nach ihrem Benutzerprofil, in Form eines Zeitplans in einem Messreferenzsystem in dem Speicher sicherstellt;

- eine Hardware- und Software-Anordnung zur Ressourcenzuweisung der IT-Infrastruktur, die die Verbindungskette der Anwendung bildet, mindestens umfassend:

i. ein Zuweisungsmodul, das, für einen gegebenen Zeitraum (T), die Zuweisung eines Intervalls von Ressourcen ermöglicht, die der IT-Infrastruktur zugewiesen werden können, welche die Verbindungskette der Anwendung bildet, in Abhängigkeit von dem ersten Ressourcenintervall, das durch das Klassifizierungsattribut des Benutzerprofils bestimmt wird, und der Anzahl von Benutzern,

- eine Hardware- und Software-Anordnung zur Überwachung, durch die Anwendung, der Verbräuche der Ressourcen der IT-Infrastruktur, die die Verbindungskette der Anwendung bildet, umfassend das Messreferenzsystem und weiter umfassend:

i. eine Hardware- und Software-Anordnung, die die Messung, durch Verbrauchssensoren, des Nutzungsgrades jeder Ressource in der gesamten IT-Infrastruktur, die die Anwendungskette bildet, während einem gegebenen Zeitraum (T) ermöglicht, und anschließend die Speicherung dieser Nutzungsgrade in Verbindung mit dem gegebenen Zeitraum (T) in dem Speicher in dem Messreferenzsystem ermöglicht,
ii. ein Modul zur Auswertung und Anpassung von zugewiesenen Ressourcen für ein Zeitintervall, das durch einen gegebenen Zeitraum (T) und durch einen nachfolgenden Zeitraum (T+1) der Nutzung definiert wird, in Abhängigkeit von einer geschätzten Anzahl von Benutzern, verteilt nach dem ersten Ressourcenintervall, das durch das Klassifizierungsattribut jedes Profils für den gegebenen Zeitraum (T) und den nachfolgenden Zeitraum (T+1) bestimmt wird, wobei das Modul zur Auswertung und Anpassung weiter ermöglicht, das Intervall der zuweisbaren Ressourcen in Abhängigkeit von einem zweiten Ressourcenintervall anzupassen, das durch das Klassifizierungsattribut des Benutzerprofils und die Anzahl von Benutzern für den nachfolgenden Zeitraum (T+1) bestimmt wird.

2. Vorrichtung nach Anspruch 1, **dadurch gekennzeichnet, dass** jeder Ressource Verbrauchssensoren zugeordnet sind zum Laden und Speichern in einem Speicher, in Abhängigkeit von jedem Benutzer, der Messdaten oder Metriken, die den Grad der Ressourcennutzung (*Nur*) für einen bestimmten Zeitraum (T) wiedergeben.

3. Vorrichtung nach Anspruch 1 oder 2, **dadurch gekennzeichnet, dass** es ein im Speicher abgespeicherter Zeitplan ermöglicht, die Anzahl von Benutzern und die Verteilung ihres Profils während eines gegebenen Zeitraums (T) zu antizipieren.

4. Vorrichtung nach einem der Ansprüche 1 bis 3, **dadurch gekennzeichnet, dass** jedes Benutzerprofil enthält ein gespeichertes Attribut der Klassifizierung (Anfänger, Fortgeschrittener, Experte) umfasst und für jede Klassifizierung ein Ressourcenintervall bestimmt wird, das je Profil abhängig von der Anzahl von Benutzern genutzt werden kann.

5. Vorrichtung nach einem der Ansprüche 1 bis 4, **dadurch gekennzeichnet, dass** sie ein Modul zur Steuerung der für jedes Intervall zugewiesenen Ressourcen umfasst, das es ermöglicht, Anomalien zu erfassen und Warnungen in Echtzeit auszugeben, wenn:

- die maximale Schwelle einer Ressource erreicht ist,
- der Verbrauch theoretischer Ressourcen, der gemäß dem Profil der angeschlossenen Benutzer vorgesehen und gespeichert ist, nicht dem gemessenen Verbrauch entspricht, und/oder
- der geschätzte Verbrauch der Ressourcen der Anwendungsverbindungskette außerhalb der zuvor festgelegten Intervalle liegt.

6. Verfahren zur Überwachung der Leistung der IT-Infrastrukturen dank der Überwachung des Ressourcenverbrauchs dieser IT-Infrastrukturen für eine IT-Infrastruktur, die die Verbindungskette einer bestimmten Anwendung bildet, implementiert durch eine Software, die auf mindestens einer Maschine der IT-Infrastruktur ausgeführt wird, **dadurch gekennzeichnet, dass** es mindestens umfasst:

- einen Schritt des Erhebens einer Anzahl von Benutzern und deren Benutzerprofilen in der Anwendungsverbindungskette für einen gegebenen Zeitraum T, wobei das Benutzerprofil ein Klassifizierungsattribut aufweist, das ein erstes Ressourcenintervall bestimmt,
- einen Schritt des Bestimmens, in Abhängigkeit von der Anzahl von Benutzern, eines Grades der Nutzung von erforderlichen Ressourcen, der jedem Benutzerprofil entspricht, während des Zeitraums T,
- einen Schritt des Zuweisens eines Intervalls von Ressourcen, die der Anwendungsverbindungskette zugewiesen werden können, in Abhängigkeit von dem ersten Ressourcenintervall, das durch das Klassifizierungsattribut des Benutzerprofils und die Anzahl von Benutzern bestimmt wird,

- einen Schritt des Auswertens der Anzahl von Benutzern je Benutzerprofil in der Anwendungskette für den nachfolgenden Zeitraum T+1 durch ein Auswertungsmodul, das in einem Speicher einen Zeitplan bestimmt, der die Anzahl von Benutzern verteilt nach einem zweiten Ressourcenintervall umfasst, das durch das Klassifizierungsattribut jedes Benutzerprofils für den nachfolgenden Zeitraum T+1 bestimmt wird,

- einen Schritt des Überprüfens des Intervalls der zuvor zugewiesenen Ressourcen für jedes Profil in Abhängigkeit von der Anzahl von Benutzern in dem nachfolgenden Zeitraum T+1 mithilfe von einer Maschine der IT-Infrastruktur und von Verbrauchssensoren,

- einen Schritt des Warnens, wenn das Intervall der zuvor zugewiesenen Ressourcen nicht der Anzahl von Benutzern je Profil in dem nachfolgenden Zeitraum T+1 entspricht, und

- optional einen Schritt des Änderns der Menge der zuvor zugewiesenen Ressourcen zum Antizipieren des Grades des Verbrauchs von erforderlichen Ressourcen für jedes Benutzerprofil für den nachfolgenden Zeitraum T+1.

**7.** Überwachungsverfahren nach Anspruch 6, **dadurch gekennzeichnet, dass** während des Schrittes des Zuweisens eines Intervalls von Ressourcen, die einer Anwendungsverbindungskette zugewiesen werden können, eine Maschine der IT-Infrastruktur überprüft, ob eine maximale Schwelle der Zuweisung einer Ressource erreicht ist, durch den Vergleich des Grenzwertes des Intervalls mit einem Maximalwert, der zuvor in einem Speicher abgespeichert wurde, wobei dann gegebenenfalls ein Warnsignal für Anomalien in der Anwendungsverbindungskette durch die Maschine der IT-Infrastruktur gesendet wird, die die Überprüfung durchgeführt hat.

**8.** Überwachungsverfahren nach Anspruch 6 oder 7, **dadurch gekennzeichnet, dass** während des Schrittes des Überprüfens des Ressourcenintervalls, der zuvor für eine Anzahl von Benutzern in dem nachfolgenden Zeitraum T+1 zugewiesen wurde,
eine Maschine der IT-Infrastruktur eine vorbeugende Warnung vor einer Anomalie in der Anwendungsverbindungskette ausgibt, wenn die Verbräuche für den Zeitraum T+1 nicht im Intervall von Ressourcen liegen, die für den Zeitraum T zugewiesen wurden.

**9.** Überwachungsverfahren nach einem der Ansprüche 6 bis 8, **dadurch gekennzeichnet, dass** es einen Schritt des Messens des Grades der genutzten Ressourcen in Echtzeit und einen Schritt des Vergleichens des Grades der genutzten Ressourcen in Echtzeit mit dem Grad der zuvor zugewiesenen Ressourcen umfasst, wobei eine Maschine der IT-Infrastruktur eine Warnung zum übermäßigen Verbrauch von Ressourcen in der Anwendungsverbindungskette ausgibt, wenn der in Echtzeit gemessene Ressourcenverbrauch kleiner ist als der Grad der zugewiesenen Ressourcen.

**10.** Überwachungsverfahren nach einem der Ansprüche 6 bis 9, **dadurch gekennzeichnet, dass** es einen Schritt der Automatisierung des Änderns der Menge der zugewiesenen Ressourcen umfasst, wenn eine Warnung durch ein Automatisierungsmodul ausgegeben wurde, das dafür konfiguriert ist, die minimalen und maximalen Werte des Intervalls der zugewiesenen Ressourcen in Abhängigkeit von den tatsächlich von den Benutzern verbrauchten Ressourcen zu ändern bzw. zu verfeinern.

## Claims

**1.** A device comprising at least one computer machine and software for implementing a mechanism for monitoring performances of IT infrastructures thanks to a monitoring of the consumptions of the resources of said IT infrastructures for an IT infrastructure making up the linking chain of a determined application, **characterized in that** the device is constituted by at least:

- a hardware and software arrangement for identification and planning of the number of users according to their profile for a given application, said user profile comprising a categorization attribute determining a first resource interval, said hardware and software arrangement comprising at least:

  i. an identification module on the one hand enabling identification of a user by association of an identifier with his control profile of the determined application for a time period (T), then ensuring on the other hand storing of the identifier in a memory;
  ii. an evaluation module on the one hand enabling evaluation of the number of users distributed according to their profile as a function of their habit of use of the determined application for the period (T), then ensuring on the other hand storing said number of users distributed according to their profile in a measuring repository comprised in the memory in the form of planning,

- a hardware and software arrangement for allocation of the IT infrastructure resources making up the linking chain of the application, comprising at least:

  i. for a given time period (T), an allocation module enabling allocation of an interval of allocatable resources on the IT infrastructure making up the linking chain of the application as a function of the first resource interval determined by the categorization attribute of the profile and number of users,

- a hardware and software arrangement for monitoring, by an application, the consumptions of the IT infrastructure resources making up the linking chain of the application, comprising the measuring repository, and further comprising

  i. a hardware and software arrangement allowing the measurement, by consumption probes, of the level of use of each resource over the entire IT infrastructure making up the application chain during a given time period (T), then enabling storing in the memory of these levels of use in the measuring repository, in association with the given period (T),

  ii. an evaluation and adjustment module of resources allocated for a time interval defined by a given time period (T) and by a later time period (T+1) of use as a function of an estimation of the number of users distributed according to first resource interval determined by the categorization attribute of each profile for the given period (T) and the later period (T+1), said evaluation and adjustment module further enabling the adjustment of the interval of allocatable resources as a function of a second resource interval determined by the categorization attribute of the user profile and number of users for the later period (T+1).

2. The device according to claim 1, **characterized in that** consumption probes are associated with each resource for feeding back and recording in memory, as a function of each user, measuring information or metrics, representing the level of use of the resources *(Nur),* for a determined time period (T) .

3. The device according to claim 1 or 2, **characterized in that** planning recorded in memory anticipates the number of users and the distribution of their profile during a given time period (T).

4. The device according to any of claims 1 to 3, **characterized in that** each user profile comprises a stored categorization attribute (novice, confirmed, expert) and a resource interval usable by profile for each categorization is determined as a function of the number of users.

5. The device according to any of claims 1 to 4, **characterized in that** it comprises a control module of resources allocated for each interval for detecting anomalies and signaling alerts in real time when:

   - the maximum threshold of a resource is achieved,
   - the consumption of theoretical resources forecasted and stored as a function of the connected user profiles does not correspond to the measured consumption, and/or
   - the estimation of the consumption of the resources of the application linking chain is outside the intervals determined earlier.

6. A method for monitoring performances of the IT infrastructures thanks to a monitoring of the consumptions of the resources of said IT infrastructures for an IT infrastructure making up the linking chain of a determined application, implemented by a software executed on at least one machine of the IT infrastructure, **characterized in that** the method comprises at least:

   - a collection step of a number of users and their user profiles on the application linking chain for a given time period, said user profile comprising a categorization attribute determining a first resource interval,
   - a determination step as a function of the number of users of a level of consumption of necessary resources corresponding to each user profile during the time period T,
   - an allocation step of an interval of allocatable resources to the application linking chain as a function of the first resource interval determined by the categorization attribute of the user profile and number of users,
   - an evaluation step of the number of users per user profile on the application chain for the later time period T+1, by an evaluation module that determines in a memory a planning comprising the number of users distributed according to a second resource interval determined by the categorization attribute of each user profile for the later time period T+1,

- a verification step of the resource interval previously allocated for each of the profiles as a function of the number of users on the later time period T+1, by means of a machine of the IT infrastructure and consumption probes,
- an alert step when the resource interval previously allocated does not correspond to the number of users per profile on the later time period T+1, and
- optionally, a modification step of the amount of resources previously allocated for anticipating the level of consumption of resources necessary for each user profile for the later time period T+1.

7. The monitoring method according to claim 6, **characterized in that** during the allocation step of an interval of allocatable resources to the application linking chain, a machine of the IT infrastructure verifies whether a maximum threshold of allocation of a resource is achieved, by comparing the limit of the interval to a maximum value previously recorded in the memory, if necessary an anomaly alert signal on the application linking chain is then sent by the machine of the IT infrastructure having performed the verification.

8. The monitoring method according to claim 6 or 7, **characterized in that** during the verification step of the resource interval previously allocated for a number of users on the later time period T+1, a machine of the IT infrastructure signaling a preventive anomaly alert on the application linking chain when the consumptions for the time period T+1 are not in the resource interval allocated for the time period T.

9. The monitoring method according to any of claims 6 to 8, **characterized in that** the method further comprises a measuring step of the level of resources used in real time and a comparison step of the level of resources used in real time with the level of resources previously allocated, a machine of the IT infrastructure signaling an overconsumption alert of resources on the application linking chain when the consumption of the resources measured in real time is less than the level of resources allocated.

10. The monitoring method according to any of claims 6 to 9, **characterized in that** the method further comprises an automation step of the modification of the amount of resources allocated when an alert has been sent by means of an automation module configured to modify/refine the minimum and maximum values of the interval of resources allocated as a function of the resources actually consumed by the users.

Planning prévisionnel de la charge sur la chaine applicative

Intervalle de consommation de ressource par serveur par profil d'utilisateur

Seuil maximum par ressource et par serveur

Collecte des mesures sur tous les serveurs ainsi du nombre d'utilisateur par profil sur la chaine applicative

Un seuil maximum est il atteint, pour une des ressources ?

Oui → Alerte d'anomalies sur la chaine applicative

Estimation des consommations des ressources à venir en fct du planning et des profils sur la chaine applicative

Figure 1

Les consommations futures seront-elles acceptables? (dans l'intervalle de confiance)

Non → Alerte préventive d'anomalies sur la chaine applicative

Oui

Calcul des consommations théoriques en fonction du nombre d'utilisateur par profil sur la chaine applicative

Les consommations de ressources mesurées sont-elles conformes aux mesures théoriques ?

Oui

Non → Alerte de surconsommation de ressources sur la chaine applicative

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015026348 A1, SIDDIQUI MUHAMMAD ALI [US]
- FR 1560474